# EUROPEAN PATENT APPLICATION

(11) **EP 4 661 197 A1**
(43) Date of publication of application: **10.12.2025**
(21) Application number: 24750108.3
(22) Date of filing: 25.01.2024
(51) Int. Cl.: H01M 50/533, H01M 10/04, H01M 10/0587, H01M 50/536

(54) **POWER STORAGE DEVICE**

(30) Priority: 31.01.2023 JP 2023013017
(71) Applicant: Panasonic Intellectual Property Management Co., Ltd., Kadoma-shi, Osaka 571-0057 (JP)
(72) Inventor: KOZUKI, Kiyomi, Osaka 571-0057 (JP); SAKAMOTO, Shinichi, Osaka 571-0057 (JP); GESHI, Shinya, Osaka 571-0057 (JP)
(74) Representative: Eisenführ Speiser
(86) International application number: PCT/JP2024/002154
(87) International publication number: WO 2024/162159

(57) **Abstract**

A power storage device (10), comprising an electrode body (14) in which a positive electrode plate (11) and a negative electrode plate (12) are stacked with a separator (13) interposed therebetween, and a negative current collector plate (40) positioned on the lower-end side of the electrode body (14) in an axial direction P, the negative current collector plate (40) having a negative electrode junction (44) that extends along a radial direction D of the electrode body (14) and is joined to the negative electrode plate (12), and the negative electrode junction (44) being inclined as seen from a circumferential direction R.

## Description

### TECHNICAL FIELD

The present disclosure relates to a current collector plate of a power storage device.

### BACKGROUND ART

A cylindrical battery that is one of power storage devices includes a wound electrode assembly where a positive electrode plate and a negative electrode plate are wound with a separator intervening therebetween. A large-diameter cylindrical battery has a structure where a negative electrode current collector plate is joined to a negative electrode core exposed portion protruding from the wound electrode assembly (hereinafter, an end surface current collection structure) in some cases (e.g., Patent Literature 1).

### CITATION LIST

### PATENT LITERATURE

PATENT LITERATURE 1: Japanese Unexamined Patent Application Publication No. 2005-203374

### SUMMARY

According to the end surface current collection structure described above, a process of joining the current collector plate and the electrode plate to each other is complicated, and there is a possibility of reducing the productivity in a process of manufacturing the power storage device.

Accordingly, it is an advantage of the present disclosure to provide a power storage device that can improve the productivity.

A power storage device according to the present disclosure comprises: an electrode assembly where a first polar plate and a second polar plate are stacked with a separator intervening therebetween; and a current collector plate disposed on one end side in an axial direction of the electrode assembly, wherein the current collector plate includes a joined portion that extends along a stacking direction of the first polar plate and the second polar plate, and that is joined to the second polar plate, and the joined portion is inclined in a direction that intersects with the stacking direction.

According to the power storage device in the present disclosure, the productivity may be improved.

### BRIEF DESCRIPTION OF DRAWING

FIG. 1 is a schematic sectional view showing a power storage device that is an example of an embodiment.
FIG. 2 is a perspective view of a joint between a negative electrode current collector plate and an electrode assembly as viewed from below.
FIG. 3 is a perspective view showing a negative electrode current collector plate that is an example of the embodiment as viewed from below.
FIG. 4 is a sectional view taken along line AA of FIG. 3.
FIG. 5 is a sectional view of a negative electrode current collector plate that is another example of the embodiment taken along AA.
FIG. 6A is a schematic diagram showing reflected light when a conventional negative electrode current collector plate is welded.
FIG. 6B is a schematic diagram showing reflected light when the negative electrode current collector plate in the present disclosure is welded.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device]

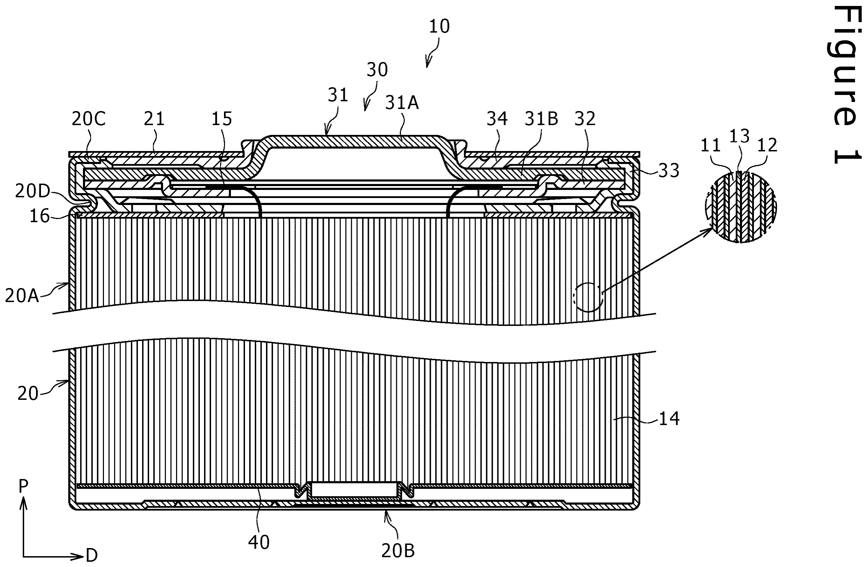

Referring to FIG. 1, a power storage device 10 that is an example of an embodiment is described.

The power storage device 10 is used as, for example, a power source of an electric vehicle. However, the power storage device in the present disclosure is not limited to the power source of an electric vehicle, and may be used as, for example, a power source of motor-driven electric equipment, such as an electric tool, an electric-assisted bicycle, an electric motorcycle, an electric wheelchair, an electric tricycle, an electric cart or the like. The power storage device in the present disclosure may be used as, for example, a power source for various types of electric equipment that are used indoors and outdoors, such as a cleaner, a radio, a lighting device, a digital camera, a video camera or the like.

The power storage device 10 includes: a wound-type electrode assembly 14 where a positive electrode plate 11 as a first polar plate, and a negative electrode plate 12 as a second polar plate are wound together, with a separator 13 intervening therebetween; an outer can 20 that accommodates the electrode assembly 14; and a sealing assembly 30 that blocks an opening of the outer can 20. The outer can 20 houses electrolytic solution along with the electrode assembly 14. The electrolytic solution in the present embodiment is non-aqueous electrolytic solution, but may be aqueous electrolytic solution. The power storage device may be a capacitor.

In the following, each member is sometimes described using an axial direction P, a circumferential direction R, and a radial direction D. For convenience of description, it is sometimes described assuming that in the axial direction P, a side on which the sealing assembly 30 is provided is an upper side, and a side on which a bottom portion 20B of the outer can 20 is formed is a lower side.

The positive electrode plate 11, the negative electrode plate 12, and the separator 13 are strip-shaped elongated bodies, and are spirally wound. In this case, the positive electrode plate 11 and the negative electrode plate 12 are stacked in a deviating manner so as to protrude oppositely from each other in the axial direction P (the height direction of the power storage device). The composite layer of the negative electrode plate 12 may be formed to have a dimension one size larger than the composite layer of the positive electrode plate 11 in order to prevent lithium from depositing. That is, the composite layer of the negative electrode plate 12 may be formed longer than the composite layer of the positive electrode plate 11 in the longitudinal direction and the width direction (transverse direction). The separator 13 is formed to have a dimension at least one size larger than the positive electrode plate 11. For example, two separators 13 are disposed so as to sandwich the positive electrode plate 11. Note that the electrode assembly 14 is not necessarily configured in the state where the positive electrode plate 11 and the negative electrode plate 12 are wound. For example, the electrode assembly 14 may be configured such that a plurality of positive electrode plates and a plurality of negative electrode plates are alternately stacked.

The positive electrode plate 11 includes a positive electrode core body, and a positive electrode composite agent layer formed on at least one surface of the core body. The positive electrode core body may be made of, for example, metal foil that is stable in the potential range of the positive electrode plate 11, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode plate 12 includes a negative electrode core body, and a negative electrode composite agent layer formed on at least one surface of the core body. The negative electrode core body may be made of, for example, metal foil that is stable in the potential range of the negative electrode plate 12, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a silicon-containing compound or the like is used as the negative-electrode active material.

The non-aqueous electrolyte housed in the outer can 20 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

A positive electrode lead 15 that extends from the axial-direction-P upper end of the electrode assembly 14, and connects the positive electrode plate 11 included in the electrode assembly 14 and the current collector plate 32 of the sealing assembly 30 to each other, and an upper insulating plate 16 disposed between the electrode assembly 14 and the sealing assembly 30 are provided above the electrode assembly 14. The positive electrode lead 15 electrically connects the positive electrode plate 11 and the sealing assembly 30 to each other. Accordingly, the positive electrode cap 31 of the sealing assembly 30 functions as a positive electrode external terminal that is a first polar external terminal. The upper insulating plate 16 prevents the positive electrode plate 11 and the positive electrode lead 15 from coming into contact with the outer can 20, and also prevents the positive electrode lead 15 from coming into contact with the negative electrode plate 12 of the electrode assembly 14.

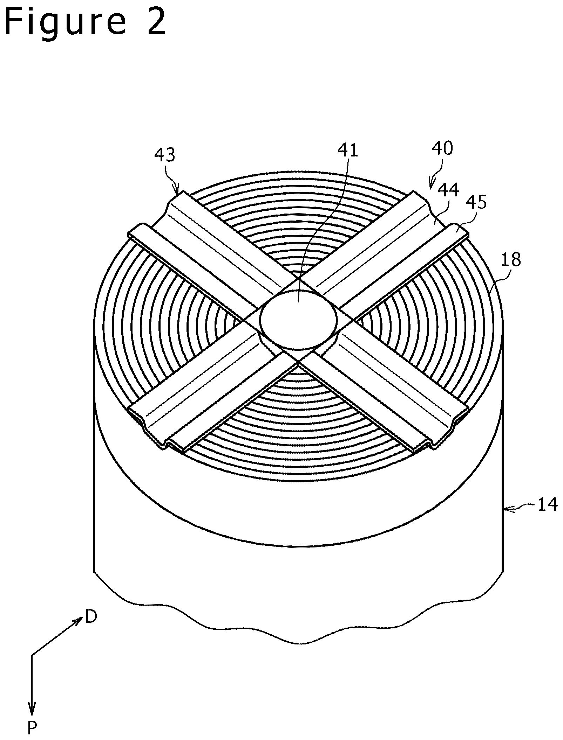

Under the electrode assembly 14 there is provided a negative electrode current collector plate 40, which is described later in detail. A negative electrode core exposed portion 18 that is part of a negative electrode core and is provided with no negative electrode composite agent layer protrudes under the negative electrode plate 12 in the axial direction P (see FIG. 2). The negative electrode core exposed portion 18 is formed from an end of the elongated negative electrode plate 12 on a winding initiation side in the longitudinal direction (circumferential direction R) to an end of its winding completion side. The negative electrode core exposed portion 18 is joined to the negative electrode current collector plate 40, and the negative electrode plate 12 and the negative electrode current collector plate 40 are electrically connected to each other. Furthermore, the negative electrode current collector plate 40 is joined to the inner surface of the bottom portion 20B of the outer can 20, and the negative electrode current collector plate 40 and the outer can 20 are electrically connected to each other.

The outer can 20 is a metal container that has a closed-bottom cylindrical shape with the axial-direction-P upper end side being open. The outer can 20 is typically made of metal, with iron as the principal component, but may be made of metal, with aluminum or the like as the principal component, in a case where the positive electrode plate 11 is connected. The outer can 20 includes: a cylindrical portion 20A that is formed to have a cylindrical shape; a bottom portion 20B that has a circular shape in bottom view; a shoulder portion 20C that is formed to have a ring shape along the circumferential direction R of the outer can 20 at the opening end of the cylindrical portion 20A; and a grooved portion 20D that is formed along the circumferential direction R of the cylindrical portion 20A. The outer can 20 is provided with a negative electrode cap 21 that is a second polar external terminal (negative electrode external terminal).

The grooved portion 20D is formed adjacent to the opening of the outer can 20 at a position apart from the shoulder portion 20C by a predetermined length. The grooved portion 20D is a portion that is part of the cylindrical portion 20A projecting to the inside of the outer can 20, and is formed by applying a spinning process to the cylindrical portion 20A from the outside, for example. Note that at the position where the grooved portion 20D is formed, the outer can 20 has a reduced diameter, and a narrow-lined groove is formed in the outer-peripheral surface of the cylindrical portion 20A. Preferably, the grooved portion 20D has a substantially U-shaped section, and is formed to have a ring shape over the entire length in the circumferential direction R of the cylindrical portion 20A.

The negative electrode cap 21 is electrically connected to the negative electrode plate 12 via the outer can 20, and functions as a negative electrode external terminal. The negative electrode cap 21 is formed to have a ring shape that has an opening at a center portion in the radial direction D. The negative electrode cap 21 is welded to the shoulder portion 20C of the outer can 20, and is electrically connected to the outer can 20.

The sealing assembly 30 is formed to have a disk shape as a whole, and includes the positive electrode cap 31, a current collector plate 32, a gasket 33, and an insulating member 34. The sealing assembly 30 is disposed above the grooved portion 20D of the outer can 20, and is fixed to the upper end portion of the outer can 20. In more detail, the shoulder portion 20C of the outer can 20 is bent inward in the radial direction D and swagged to the sealing assembly 30, the sealing assembly 30 is fixed to the upper end portion of the outer can 20 by the shoulder portion 20C and the grooved portion 20D of the outer can 20, and the sealing assembly 30 blocks the opening of the outer can 20.

The positive electrode cap 31 is electrically connected to the positive electrode plate 11 via the positive electrode lead 15 and the current collector plate 32, and functions as a positive electrode external terminal. The positive electrode cap 31 is a disk-shaped metal member, and includes: an elevated portion 31A whose center portion in the radial direction D protrudes to the outside of the power storage device 10; and a flange portion 31B formed around the elevated portion 31A. The positive electrode cap 31 is disposed on the upper surface side of the sealing assembly 30, and is exposed outside the outer can 20, thus forming a top surface of the power storage device 10. A positive electrode tab or the like is joined by welding to the elevated portion 31A.

The current collector plate 32 is electrically connected to the positive electrode plate 11 via the positive electrode lead 15, and functions as a positive electrode current collector plate. The current collector plate 32 is a metal member that has a diameter comparable to that of the positive electrode cap 31. The current collector plate 32 is formed to have a ring shape that has an opening at a center portion in the radial direction D. The current collector plate 32 is disposed closer to the electrode assembly 14 than the positive electrode cap 31. The current collector plate 32 is welded to the positive electrode cap 31, and is thus welded, for example, at a position closer to the outer peripheral edge of the positive electrode cap 31 than its center in the radial direction D.

The gasket 33 is a rubber member or a plastic member that prevents the positive electrode cap 31 and the current collector plate 32 from coming into contact with the outer can 20, and secures electrical insulation between the outer can 20 and the sealing assembly 30. The gasket 33 blocks the gap between the outer can 20 and the sealing assembly 30, and seals the inside of the power storage device 10. The gasket 33 is provided between the outer peripheral portion of the stacked body of the positive electrode cap 31 and the current collector plate 32, and the outer can 20. The gasket 33 covers the upper surface of the flange portion 31B of the positive electrode cap 31, the side surfaces of the positive electrode cap 31 and the current collector plate 32, and the lower surface of the current collector plate 32, at the outer peripheral portion of the stacked body.

The insulating member 34 is a rubber member or a plastic member for preventing contact between the positive electrode cap 31 and the negative electrode cap 21, and securing electric insulation between the positive electrode cap 31 and the negative electrode cap 21. The insulating member 34 is formed to have a ring shape that has an opening at a center portion in the radial direction D.

### [Negative Electrode Current Collector Plate]

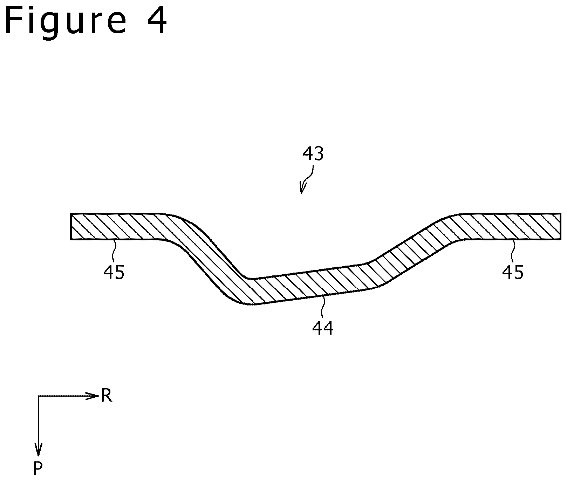

Referring to FIGS. 2 to 6, the negative electrode current collector plate 40 that is an example of the embodiment is described.

As shown in FIG. 2, the negative electrode current collector plate 40 as the current collector plate is joined to the negative electrode core exposed portion 18 that protrudes from the axial-direction-P lower side of the electrode assembly 14. The negative electrode current collector plate 40 is joined to the bottom portion 20B of the outer can 20, and allows the outer can 20 to function as a negative electrode external terminal. Although the details are described later, the negative electrode current collector plate 40 can improve the productivity of the power storage device 10.

The negative electrode current collector plate 40 is made of metal, preferably, for example, made of copper, a copper alloy, nickel or a nickel alloy, an iron material having a nickel-plated surface, or the like. The negative electrode current collector plate 40 is provided under the electrode assembly 14 in the axial direction P, and is housed along with the electrode assembly 14 in the outer can 20. In other words, the negative electrode current collector plate 40 is disposed between the electrode assembly 14 and the bottom portion 20B of the outer can 20 (see FIG. 1).

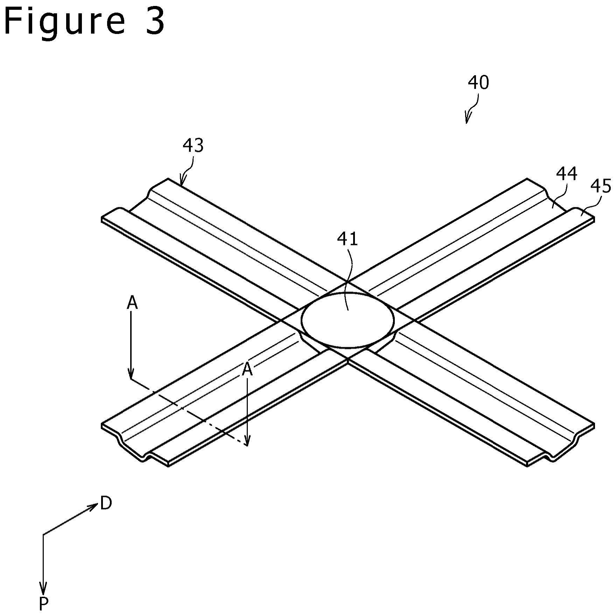

As shown in FIGS. 2 and 3, the negative electrode current collector plate 40 includes a center portion 41 provided at a center portion in the radial direction D (the stacking direction of the positive electrode plate 11 and the negative electrode plate 12), and extending portions 43 each extending from the center portion 41 along the radial direction D, which are described later in detail. The center portion 41 is a portion joined by welding to the bottom portion 20B of the outer can 20.

The plurality of extending portions 43 each extend from the center portion 41 along the radial direction D. The plurality of extending portions 43 are disposed at intervals in the circumferential direction R. In the example shown in FIG. 3, the four extending portions 43 are radially disposed from the center portion 41 at 90°-intervals. Note that the present embodiment has the configuration where the extending portions 43 extend in the four directions. Alternatively, a configuration where the extending portions 43 extend in one, two, three, five or more directions may be employed.

As shown in FIGS. 2 to 4, each extending portion 43 includes: a joined portion 44 extending in the radial direction D; and edge portions 45 formed at the opposite ends of the joined portion 44 in the circumferential direction R. The joined portion 44 is a portion joined by welding to the negative electrode core exposed portion 18. In more detail, the negative electrode core exposed portion 18 is joined by welding to the upper surface of the joined portion 44 in the axial direction P. The joined portion 44 extends along the radial direction D, and is formed at a portion corresponding to a base of a depressed shape viewed from the radial direction D. In other words, the joined portion 44 is formed on the bottom surface of the depressed shape.

The joined portion 44 is inclined as viewed from the radial direction D. In other words, the joined portion 44 extends in an inclined manner in a direction intersecting with the radial direction D (e.g., the direction orthogonal to the radial direction D). The inclined angle of the joined portion 44 viewed from the radial direction D is greater than or equal to 3° and less than or equal to 10° from the horizontal plane, and preferably, greater than or equal to 5° and less than or equal to 10°. Preferably, the inclined angle of the joined portion 44 is the same along the radial direction D. The inclined direction of the joined portion 44 (the right side viewed from the outside in the radial direction D is disposed upward, or the left side is disposed upward) is not specifically limited. In a case of irradiation with a light source of laser being moved in the radial direction D, the inclination in the circumferential direction R intersecting with the radial direction D can prevent the difference in the distance between the light source and the irradiation surface in the radial direction, in comparison with a configuration with the inclination in the radial direction D, thus allowing the fusibility at the joined portion to be prevented from being uneven.

The edge portion 45 is a portion in contact with the negative electrode core exposed portion 18. The edge portions 45 may be provided on the opposite ends of the joined portion 44 in the circumferential direction R. Alternatively, the edge portion 45 may be formed only on one end side. The edge portions 45 in the present embodiment are substantially horizontally formed. Alternatively, the edge portions 45 may be formed in an inclined manner.

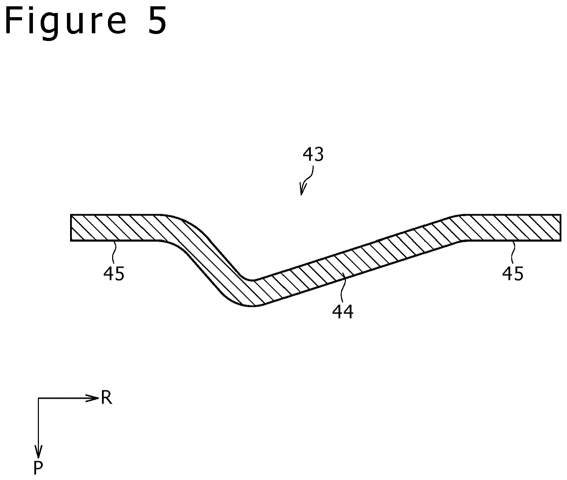

As shown in FIG. 5, the joined portion 44 may be formed at a portion corresponding to one side of a V-shape viewed from the radial direction D. Preferably, in this case, one inclined surface corresponding to the joined portion 44 viewed from the radial direction D is formed to be longer than the other inclined surface. Such a configuration allows the inclined surface to be irradiated with laser more securely than the negative electrode current collector plate where the inclined surface is at the center of the depression, for example. Preferably, in this case, at the joined portion, which is the inclined surface, there is disposed a congealed portion formed by irradiation with laser between the opposite ends in the circumferential direction R. As described above, the joined portion 44 is inclined as viewed from the radial direction D. The inclined angle of the joined portion 44 viewed from the radial direction D is greater than or equal to 3° and less than or equal to 10° from the horizontal plane, and preferably, greater than or equal to 5° and less than or equal to 10°.

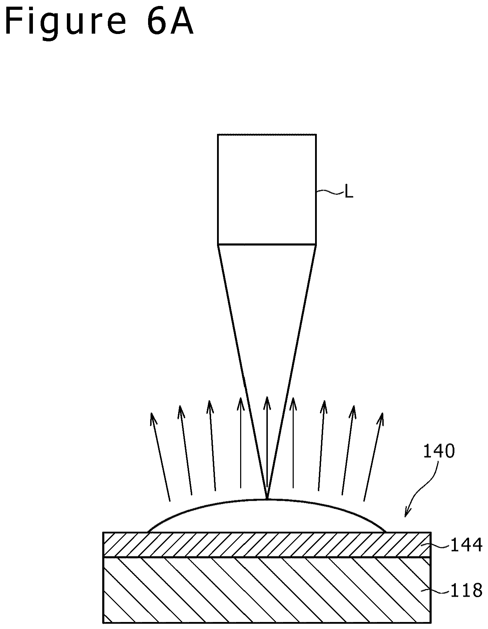

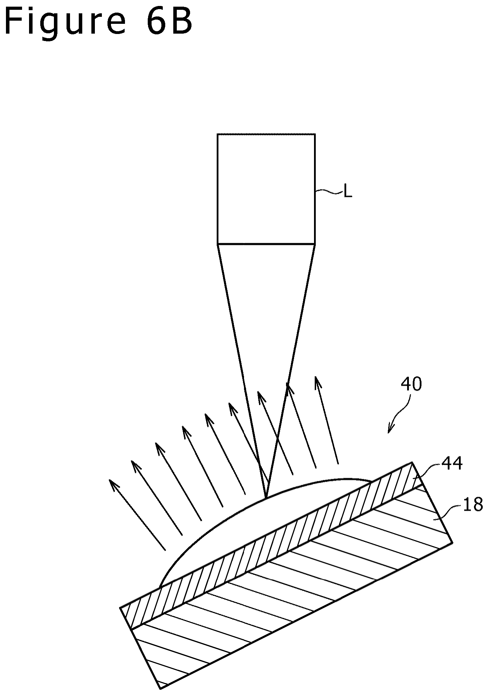

Referring to FIGS. 6A and 6B, the negative electrode current collector plate 40 is described in comparison with a conventional negative electrode current collector plate 140.

According to the end surface current collection structure, the negative electrode current collector plate 140 that is elongated along the radial direction D of an electrode assembly 114 is joined by welding to a negative electrode core exposed portion 118 that is bent downward and protrudes from the electrode assembly 114. In a process of joining the end surface current collection structure, by irradiation with laser or the like from the lower side of the negative electrode current collector plate 140, the negative electrode current collector plate 140, and the negative electrode core exposed portion 118 in close contact with the upper surface of the negative electrode current collector plate are fused and joined to each other.

In some cases, the negative electrode current collector plate 140 is formed of copper or aluminum that is a highly reflective material. In a laser oscillator L, there is a possibility that when reflected light is returned into the laser oscillator L, laser irradiation becomes instable, which causes a failure of the laser oscillator L. Upon detection of the reflected light to the laser oscillator L, this laser oscillator L controls stopping laser irradiation. Accordingly, as shown in FIG. 6A, when the joined portion 144 of the negative electrode current collector plate 140 and the negative electrode core exposed portion 118 are subjected to laser welding, the light intensity of the reflected light to the laser oscillator L is high. Accordingly, the laser oscillator L sometimes detects the reflected light and stops.

As measures against the problem, for example, a method of laser irradiation with a laser transmitter being inclined is also conceivable. However, a laser incident angle following operation is required to be performed using a robot, an XY stage or the like that supports the laser transmitter, and the production rate decreases, which possibly reduces the productivity.

In the negative electrode current collector plate 40 in the present embodiment, the joined portion 44 is inclined as viewed from the radial direction D (inclined in a direction intersecting with the radial direction D). Accordingly, the reflected light returning to the laser oscillator L can be prevented. In more detail, when the negative electrode current collector plate 40 and the negative electrode core exposed portion 18 are subjected to laser welding, the joined portion 44 is inclined as viewed from the radial direction D. Accordingly, the laser irradiation surface is inclined, and the reflected light to the laser oscillator L can be prevented. Consequently, the laser oscillator L can be prevented from being stopped due to the return of the reflected light.

In the negative electrode current collector plate 40 in the present embodiment, the joined portion 44 is inclined as viewed from the radial direction D. Accordingly, the length of the joined portion 44 in the circumferential direction R is longer than that in the case where the joined portion 44 is horizontal as viewed from the radial direction D. Consequently, the welding width between the negative electrode current collector plate 40 and the electrode assembly 14 can be increased.

Furthermore, in the negative electrode current collector plate 40 in the present embodiment, the joined portion 44 is inclined as viewed from the radial direction D. Accordingly, the deepest portion of the joined portion 44 penetrates deeper into the negative electrode core exposed portion 18 than that in the case where the joined portion 44 is horizontal as viewed from the radial direction D. Consequently, the joining intensity between the negative electrode current collector plate 40 and the electrode assembly 14 can be increased. Preferably, in the case where the negative electrode current collector plate 40 includes a plurality of joined portions 44, the inclined direction of the inclined surface is the same in the circumferential direction. According to this configuration, the displacement in the winding direction that occurs during charge and discharge of the wound electrode assembly 14 can be more strictly regulated.

Note that the present disclosure is not limited to the aforementioned embodiments and their modified examples, and it is a matter of course that various change and improvement can be made in a range of the items described in the claims of the present application. In the above description, the configuration of the current collector plate used for the power storage device in the present disclosure is described as that of the negative electrode current collector plate. Alternatively, the current collector plate in the present disclosure may be a positive electrode current collector plate. The current collector plate in the present disclosure may be joined to the sealing assembly instead of the outer can. Alternatively, the current collector plate in the present disclosure may be disposed on the opening side of the outer can, and also serve as the sealing assembly.

### REFERENCE SIGNS LIST

10 Power storage device, 11 Positive electrode plate (first polar plate), 12 Negative electrode plate (second polar plate), 13 Separator, 14 Electrode assembly, 15 Positive electrode lead, 16 Upper insulating plate, 18 Negative electrode core exposed portion, 20 Outer can, 20A Cylindrical portion, 20B Bottom portion, 20C Shoulder portion, 20D Grooved portion, 21 Negative electrode cap, 30 Sealing assembly, 31 Positive electrode cap, 31A Elevated portion, 31B flange portion, 32 Current collector plate, 33 Gasket, 34 Insulating member, 40 Negative electrode current collector plate, 41 Center portion, 43 Extending portion, 44 Joined portion, 45 Edge portion, 118 Negative electrode core exposed portion, 140 Negative electrode current collector plate, 144 Joined portion

## Claims

1. A power storage device, comprising: an electrode assembly where a first polar plate and a second polar plate are stacked with a separator intervening therebetween; and a current collector plate disposed on one end side in an axial direction of the electrode assembly, wherein
the current collector plate includes a joined portion that extends along a stacking direction of the first polar plate and the second polar plate, and that is joined to the second polar plate, and
the joined portion is inclined in a direction that intersects with the stacking direction.

2. The power storage device according to Claim 1, wherein
the joined portion is formed on a bottom surface having a depressed shape as viewed from the stacking direction.

3. The power storage device according to Claim 2, wherein
in an inclined direction of the joined portion, between opposite ends of the joined portion, a congealed portion is formed.

4. The power storage device according to Claim 1, wherein
the joined portion is one side of a V-shape as viewed from the stacking direction.

5. The power storage device according to any one of Claims 1 to 4, wherein
an inclined angle of the joined portion is greater than or equal to 5° and less than or equal to 10°.

6. The power storage device according to any one of Claims 1 to 5, wherein
the joined portion is joined by welding due to laser irradiation.

7. The power storage device according to any one of Claims 1 to 6, wherein
the first polar plate and the second polar plate are wound with the separator intervening therebetween,
the electrode assembly has a cylindrical shape, and
the joined portion extends along a radial direction of the electrode assembly.

8. The power storage device according to any one of Claims 1 to 7, wherein
the current collector plate includes a plurality of the joined portions, and
the plurality of joined portions are inclined with an identical orientation in a circumferential direction of the electrode assembly.
